# EUROPÄISCHE PATENTSCHRIFT

(11) **EP 2 987 669 B1**
(45) Veröffentlichungstag und Bekanntmachung des Hinweises auf die Patenterteilung: **09.06.2021**
(21) Anmeldenummer: 15182017.2
(22) Anmeldetag: 21.08.2015
(51) Int. Cl.: B60J 7/16, B60J 7/11

(54) **FAHRERKABINE FÜR EIN LANDWIRTSCHAFTLICHES FAHRZEUG**
DRIVER'S CAB FOR AN AGRICULTURAL VEHICLE
CABINE DE CONDUCTEUR POUR UN VEHICULE AGRICOLE

(30) Priorität: 19.08.2014 DE 102014113536
(43) Veröffentlichungstag der Anmeldung: 24.02.2016
(73) Patentinhaber: CLAAS Tractor S.A.S., 78141 Vélizy-Villacoublay Cedex (FR)
(72) Erfinder: Thetiot, Christophe, 91940 Gometz le Chateö (FR)
(74) Vertreter: CLAAS Gruppe

(56) Entgegenhaltungen:
- EP-A2- 1 288 044
- EP-A2- 2 705 965
- GB-A- 1 194 910
- US-A- 4 121 870
- US-A- 4 127 302
- US-A- 4 394 044

## Beschreibung

Die Erfindung betrifft eine Fahrerkabine eines landwirtschaftlichen Fahrzeugs gemäß dem Oberbegriff des Anspruchs 1.

Landwirtschaftliche Fahrzeuge, beispielsweise Traktoren oder selbstfahrende Erntemaschinen, sind üblicherweise mit einer Fahrerkabine für einen Bediener des landwirtschaftlichen Fahrzeuges ausgestattet. Die Fahrerkabine weist dabei eine oder mehrere Kabinenscheiben auf, welche dem Bediener eine Sicht nach draußen ermöglichen und ihn zugleich vor Umgebungseinflüssen, beispielsweise Regen, schützen können. Um die Übersichtlichkeit und somit auch die Sicherheit bei der Bedienung des landwirtschaftlichen Fahrzeuges zu erhöhen, soll die Fahrerkabine dem Bediener eine möglichst störungsfreie Sicht aus der Fahrerkabine hinaus ermöglichen, weswegen heutige Fahrerkabinen oft eine großzügige Verglasung mit großflächigen Kabinenscheiben aufweisen. Nach oben hin ist die Fahrerkabine mit einem Kabinendach abgeschlossen, welches den Bediener vor Regen und direkter Sonneneinstrahlung schützen kann.

Um dem Bediener während des Betriebs des Fahrzeuges eine bessere Sicht nach oben zu ermöglichen, beispielsweise bei der Arbeit mit einem an das landwirtschaftliche Fahrzeug angebauten Frontlader, kann das Kabinendach eine Dachöffnung aufweisen, welche mit einer transparenten Abdeckung versehen ist. Dadurch kann die Sicht des Bedieners nach oben zwar verbessert werden, der Schutz des Bedieners vor direkter Sonneneinstrahlung durch das Kabinendach wird jedoch verringert. Bei einer Arbeit, welche die verbesserte Sicht nach oben nicht erfordert, beispielsweise bei der Bearbeitung eines Feldes, kann die Sonneneinstrahlung durch das Kabinendach den Bediener blenden und zu einer stärkeren Aufheizung der Fahrerkabine führen, als ein geschlossenes Kabinendach.

Aus der EP 1 288 044 A2 ist eine Dachlukenabdeckung für ein Fahrzeug bekannt, die eine Blende und ein Fensterelement mit einer durchsichtigen Scheibe zur Abdeckung einer Dachluke aufweist, wobei sowohl das Fensterelement als auch die Blende um eine gemeinsame Achse schwenkbar mit dem Dach verbunden sind und wobei die Blende zumindest bereichsweise oberhalb des Fensterelements angeordnet ist. Nachteilig ist dabei, dass die Dachluke mit einer doppelte Abdeckung versehen ist, wodurch das Dach nicht nur einen größeren Bauraum benötigt, sondern durch den komplexeren Aufbau mit einer Vielzahl von Bauteilen auch höherer Kosten bei der Herstellung sowie der Montage verursacht

US 4 394 044 und US 4 220 368 offenbaren beide ein Fahrzeug mit einem transparenten Abdeckmodul als Wechseleinsatz, wobei die Innenseite nicht oberflächenbündig ist.

Dokument EP2 705 965 offenbart ein landwirtschaftliches Fahrzeug mit einer wechselbaren transparenten und nicht transparenten Dachlücke.

Es ist daher die Aufgabe der vorliegenden Erfindung ein landwirtschaftliches Fahrzeug mit einer Fahrerkabine der eingangs erwähnten Art bereitzustellen, die im Hinblick auf die Sichtverhältnisse des Bedieners und störendes Umgebungslicht verbesserte Arbeitsbedingungen ermöglicht. Weiterhin soll eine kostengünstige Herstellung der Fahrerkabine ermöglicht werden.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine Fahrerkabine für ein landwirtschaftliches Fahrzeug weist ein Kabinendach auf, wobei das Kabinendach mindestens eine durchgängige Dachöffnung aufweist. Erfindungsgemäß ist das Kabinendach derart ausgebildet und ausgestaltet, dass in der Dachöffnung ein mit dem Kabinendach zusammenwirkender Wechseleinsatz lösbar anordbar ist, wobei der Wechseleinsatz in Form eines intransparenten Abdeckmoduls oder eines im Wesentlichen transparenten Abdeckmoduls ausgebildet ist und das intransparente Abdeckmodul (32) derart ausgebildet ist, dass in der geschlossenen Position die Befestigungsmittel (34) und/oder Aufnahmen der Befestigungsmittel (34) durch das intransparente Abdeckmodul (32) abgedeckt werden und der Wechseleinsatz (28) in einer geschlossenen Position innenseitig und außenseitig oberflächenbündig dem Formverlauf des Kabinendaches (18) folgend ausgebildet ist, wird sichergestellt, dass bei einem Austausch des Wechseleinsatzes an dem Kabinendach verbleibende Befestigungsmittel, nicht genutzte Befestigungsmittel oder deren Aufnahmen an dem Kabinendach, abgedeckt werden, um beispielsweise ein Eindringen von Wasser oder Schmutz zu vermeiden. Dies kann besonders vorteilhaft sein, wenn ein Öffnen des Wechseleinsatzes nicht benötigt wird.

Zudem hat dies den Effekt, dass der Wechseleinsatz in einer geschlossenen Position innenseitig und außenseitig oberflächenbündig dem Formverlauf des Kabinendaches folgend Beschädigungen des Wechseleinsatzes vermeidet, beispielsweise durch während der Fahrt über das Kabinendach streifende Äste.

Dadurch, dass der Wechseleinsatz als intransparentes Abdeckmodul oder im Wesentlichen transparentes Abdeckmodul ausgebildet sein kann, ist es möglich durch ein Einsetzten, und/oder insbesondere Austauschen, des entsprechenden Abdeckmoduls sowohl einen intransparenten Zustand als auch einen zumindest teilweise transparenten Zustand des Kabinendaches herzustellen. In dem transparenten Zustand kann das Dach zumindest in dem Bereich der Dachöffnung transparent ausgebildet sein. Der jeweilige Wechseleinsatz wird dabei jeweils an demselben Kabinendach angeordnet. Durch das Austauschen des Wechseleinsatzes kann die Fahrerkabine optimal an die durchzuführenden Arbeiten angepasst werden, so dass beispielsweise bei Arbeiten mit einem angebauten Frontlader durch das transparente Abdeckmodul die Sicht des Bedieners nach oben, insbesondere auf den Frontlader, verbessert werden kann. Für die Bearbeitung eines Feldes beispielsweise, bei der eine Sicht nach oben nicht erforderlich ist, kann das transparente Abdeckmodul gegen ein intransparentes Abdeckmodul ausgetauscht werden, so dass der Bediener gegen störendes Umgebungslicht geschützt ist. Zudem kann so ein Aufheizen der Fahrerkabine durch einfallendes Umgebungslicht reduziert werden. Dadurch, dass der jeweilige Wechseleinsatz an demselben Kabinendach angeordnet wird, wird nur eine Variante des Kabinendaches sowohl für den intransparenten als auch für den transparenten Zustand des Kabinendaches benötigt, so dass die Anzahl der zur Herstellung benötigten Bauteile reduziert werden können, wodurch das Variantenmanagement verbessert und die Herstellungskosten gesenkt werden können. Durch die reduzierte Bauteilanzahl und den modularen Aufbau mit dem Wechseleinsatz können zudem die Kosten für die Montage sowie für eine Umrüstung der Fahrerkabine gesenkt werden.

Gemäß der Erfindung ist mindestens ein innenseitig und/oder außenseitig an dem Kabinendach angeordnetes Befestigungsmittel zum lösbaren Befestigen des Wechseleinsatzes vorgesehen. Das Befestigungsmittel kann dabei in einer Art ausgebildet sein, die insbesondere ein werkzeugloses, einfaches Lösen des Wechseleinsatzes mit wenigen Handgriffen ermöglicht. Dadurch kann der Wechseleinsatz von dem Bediener zügig gewechselt werden, um das landwirtschaftliche Fahrzeug an die jeweiligen Arbeitsbedingungen anzupassen.

Besonders bevorzugt ist das Befestigungsmittel derart ausgebildet und angeordnet, dass der Wechseleinsatz von einer geschlossenen Position in eine geöffnete Position verbringbar ist. Das Verbringen des Wechseleinsatzes in die geöffnete Position bietet den zusätzlichen Vorteil, dass Frischluft von außen durch die Dachöffnung in die Fahrerkabine geleitet werden kann. Besonders bei dem intransparenten Abdeckmodul bietet dies die Möglichkeit, bei Abschirmung von störenden Umgebungslicht Frischluft zuzuführen.

In einer bevorzugten Ausgestaltung der Erfindung ist das Befestigungsmittel ein insbesondere frontseitig an dem Kabinendach angeordnetes Kippscharnier. Das Kippscharnier ermöglicht ein einfaches Öffnen der Dachöffnung durch ein teilweises Anheben des Wechseleinsatzes. Eine frontseitige Anordnung des Kippscharniers hat den Vorteil, dass ein Öffnen des Wechseleinsatzes nicht entgegen der Fahrtrichtung erfolgt, und daher auch bei höherer Geschwindigkeit, beispielsweise bei einer Straßenfahrt, gefahrlos erfolgen kann.

Ferner ist bevorzugt vorgesehen, dass eine Dachöffnung frontseitig und/oder heckseitig an dem Kabinendach angeordnet ist. Die Dachöffnungen können gleich oder unterschiedlich ausgebildet sein. Vorteilhaft ist dabei, dass das Kabinendach optimal an die jeweiligen Bedürfnisse des Bedieners angepasst werden kann. Bei gleich ausgebildeten Dachöffnungen können untereinander auswechselbare Wechseleinsätze vorgesehen sein. Der Wechseleinsatz kann unterschiedlich ausgebildet sein, beispielsweise als intransparentes Abdeckmodul oder transparentes Abdeckmodul. Dies bietet den Vorteil, dass bei einem unveränderten Kabinendach durch Einsetzten eines entsprechenden Wechseleinsatzes kostengünstig und auf einfache Weise sowohl ein intransparenter Zustand als auch ein zumindest teilweise transparenter Zustand des Kabinendaches herstellbar ist. Dies hat den Vorteil, dass beispielsweise je nach zu verrichtender Arbeit das Kabinendach umgerüstet werden kann.

In einer bevorzugten Ausgestaltung der Erfindung weist das intransparente Abdeckmodul innenseitig einen, insbesondere innerhalb der Dachöffnung angeordneten, Bauraum auf. Der Bauraum, welcher von der Innenseite der Fahrerkabine zugänglich sein kann, bietet die Möglichkeit beispielsweise zusätzlichen Stauraum oder Platz für technische Geräte bereitzustellen.

Weiterhin betrifft die Erfindung ein Montageverfahren nach Anspruch 5 für ein Kabinendach einer Fahrerkabine eines landwirtschaftlichen Fahrzeuges. Erfindungsgemäß wird dafür ein Kabinendach mit einer Dachöffnung sowie mindestens ein Wechseleinsatz zum Zusammenwirken mit dem Kabinendach bereitgestellt, wobei der Wechseleinsatz in Form eines intransparenten oder im Wesentlichen transparenten Abdeckmoduls ausgebildet ist. Der Wechseleinsatz wird dabei zur Herstellung eines intransparenten oder zumindest teilweise transparenten Zustandes des Kabinendaches in der Dachöffnung angeordnet und lösbar mit dem Kabinendach befestigt.

Durch den Einsatz des Wechseleinsatzes kann die Fahrerkabine optimal an die durchzuführenden Arbeiten angepasst werden, so dass beispielsweise bei Arbeiten mit einem angebauten Frontlader durch das transparente Abdeckmodul die Sicht des Bedieners nach oben, insbesondere auf den Frontlader, verbessert werden kann. Für die Bearbeitung eines Feldes beispielsweise, bei der eine Sicht nach oben nicht erforderlich ist, kann das transparente Abdeckmodul gegen ein intransparentes Abdeckmodul ausgetauscht werden, so dass der Bediener gegen störendes Umgebungslicht geschützt ist. Dadurch, dass der jeweilige Wechseleinsatz an demselben Kabinendach angeordnet wird, wird nur eine Variante des Kabinendaches sowohl für den intransparenten als auch für den transparente Zustand des Kabinendaches benötigt, so dass die Anzahl der zur Herstellung benötigten Bauteile reduziert werden, wodurch das Variantenmanagement verbessert und die Herstellungskosten gesenkt werden können. Durch die reduzierte Bauteilanzahl und den modularen Aufbau mit dem Wechseleinsatz können zudem die Kosten für die Montage sowie für eine Umrüstung der Fahrerkabine gesenkt werden.

In einer vorteilhaften Weiterbildung des Verfahrens wird ein in der Dachöffnung angeordneter Wechseleinsatz demontiert. Durch die Demontage eines bereits in der Dachöffnung angeordneten Wechseleinsatzes kann ein Austausch des Wechseleinsatzes mit geringem Arbeitsauswand durchgeführt. Der Wechseleinsatz kann dabei gegen einen gleichen oder gegen einen unterschiedlichen Wechseleinsatz ausgetauscht werden. So kann beispielsweise eine mit einem Wechseleinsatz in Form eines intransparenten Abdeckmoduls mit geringem Montage- und Zeitaufwand gegen ein Wechseleinsatz in Form eines transparenten Abdeckmoduls ausgetauscht werden.

Nachfolgend wird die Erfindung unter Bezugnahme auf die anliegenden Zeichnungen näher erläutert.

Es zeigen:
- Fig. 1:: eine schematische Seitenansicht eines landwirtschaftlichen Fahrzeuges mit einer erfindungsgemäßen Fahrerkabine;
- Fig. 2:: eine schematische, perspektivische Ansicht eines Dachmoduls eines Kabinendaches;
- Fig. 3:: eine schematische, perspektivische Ansicht eines Dachmoduls mit einem Wechseleinsatz in Form eines im Wesentlichen transparenten Abdeckmoduls;
- Fig. 4:: eine schematische, perspektivische Ansicht eines Dachmoduls mit einem Wechseleinsatz in Form eines intransparenten Abdeckmoduls; und
- Fig. 5:: eine geschnittene Seitenansicht des intransparenten Abdeckmoduls in Fig. 4.

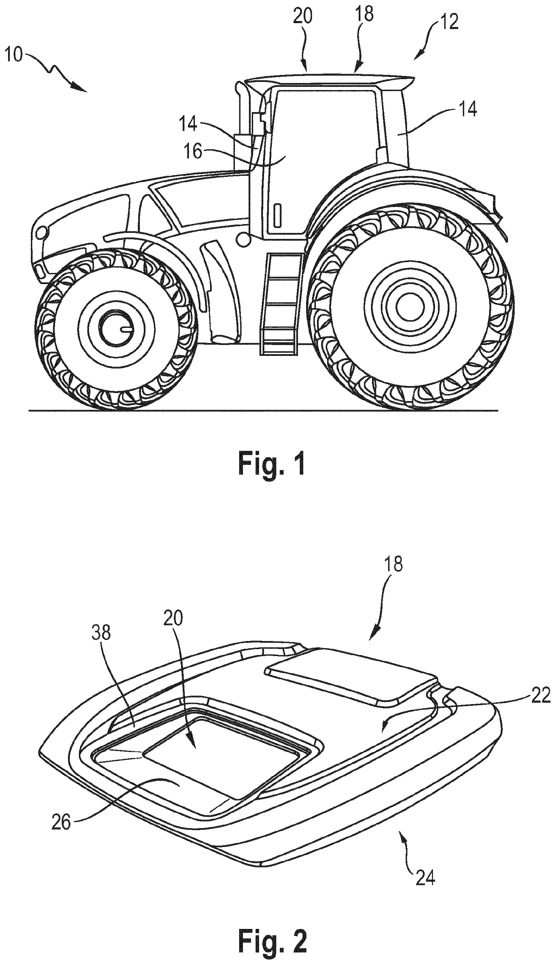

In Figur 1 ist ein landwirtschaftliches Fahrzeug 10 in Form eines Traktors schematisch von der Seite dargestellt, wobei der grundsätzliche Aufbau eines Traktors als dem Fachmann bekannt angesehen wird. Ein landwirtschaftliches Fahrzeug 10 kann jedes zur landwirtschaftlichen Arbeit einsetzbare Fahrzeug sein, beispielsweise ein Traktor, ein Frontlader oder eine Erntemaschine wie ein Mähdrescher oder Feldhäcksler. Der Traktor weist zur Aufnahme eines Bedieners eine geschlossene Fahrerkabine 12 auf, wobei innerhalb der Fahrerkabine 12 üblicherweise Anzeige- und Bedienelemente (nicht dargestellt) zur Bedienung des landwirtschaftlichen Fahrzeuges angeordnet sind. Um dem Bediener einen möglichst guten Überblick auf den Traktor 10 und angebaute Arbeitsgeräte aus der Fahrerkabine 12 zu ermöglichen, weist die Fahrerkabine 12 des Traktors großflächig ausgebildete Kabinenscheiben 14 auf, welche auch in Form einer Kabinentür 16 ausgebildet sein können. Die Kabinenscheiben 14 sind dabei im Wesentlichen unterbrechungsfrei rundherum unterhalb eines Kabinendaches 18 der Fahrerkabine 12 angeordnet. In dem Kabinendach 18 ist in einem vorderen Bereich eine Dachöffnung 20 ausgebildet, deren Position in der Seitenansicht der Traktors 10 in Figur 1 mit einem Pfeil angedeutet ist.

In Figur 2 ist das Kabinendach 18 der in Figur 1 gezeigten Fahrerkabine 12 zu Erläuterungszwecken einzeln dargestellt. Das Kabinendach 18 weist ein eine im Wesentlichen quadratische Grundform mit nach außen gewölbten Kanten auf. Das Kabinendach 18 kann an einer Außenseite 22 Rinnen aufweisen, die in Ablaufen beispielsweise von Regenwasser ermöglichen. In dem vorderen, der Frontseite des Traktors zugewandten, Bereich des Kabinendaches 18 ist die durchgängige Dachöffnung 20 ausgebildet. Alternativ oder zusätzlich kann eine entsprechende Dachöffnung rückseitig an dem Kabinendach 18 angeordnet sein, beispielsweise um dem Bediener einen besseren Blick auf ein heckseitig an dem Traktor angebautes Arbeitsgerät zu ermöglichen. Unter einer durchgängigen Dachöffnung 20 ist eine Öffnung in dem Kabinendach 18 zu verstehen, die sich von einer Innenseite 24 des Kabinendaches 18 bis zu der Außenseite 22 des Kabinendaches 18 erstreckt. Die Dachöffnung 20 weist eine im Wesentlichen rechteckige Form auf, wobei die Abmessungen der Dachöffnung 20 an der Außenseite 22 und der Innenseite 24 unterschiedlich sind. Durch die unterschiedlichen Abmessungen der Dachöffnung 20 an der Innen- und Außenseite 22,24 ist eine durch den Abstand zwischen der Außenseite 22 und Innenseite 24 des Kabinendaches 18 bedingte Wandung 26 zu einer Lotrechten geneigt ausgebildet. Die Neigung der Wandung 26 der Dachöffnung 20 ist dabei frontseitig besonders stark ausgeprägt, und kann insbesondere an einer Sichtlinie des Bedieners orientiert sein, um für den Bediener eine möglichst ungehinderte Sicht beispielsweise auf einen angebauten Frontlader zu ermöglichen.

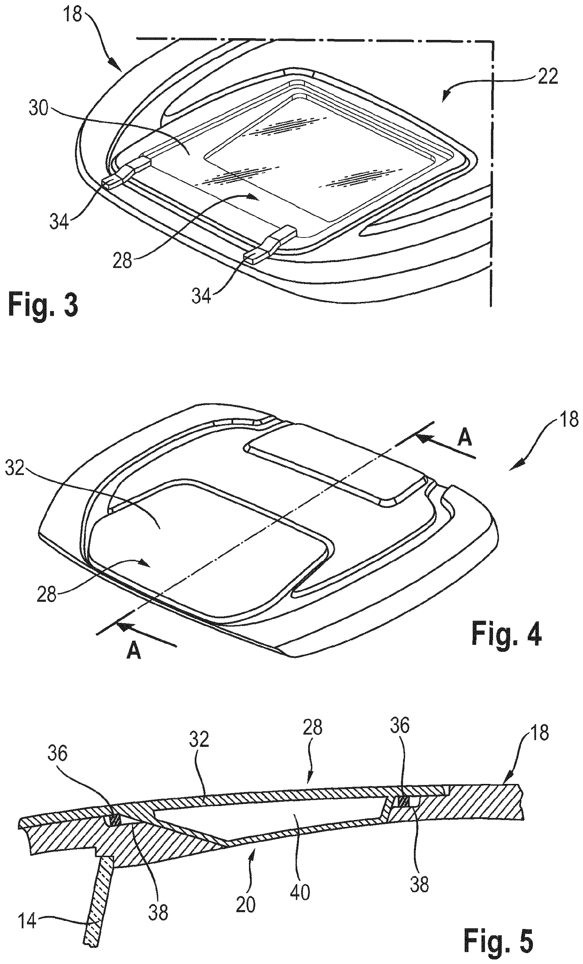

Erfindungsgemäß ist das Kabinendach 18 derart ausgebildet und ausgestaltet, dass in der Dachöffnung 20 ein mit dem Kabinendach 18 zusammenwirkender Wechseleinsatz 28 lösbar anordbar ist (Fig. 3). Der Wechseleinsatz 28 ist dabei im Wesentlichen innerhalb der Dachöffnung 20 des Kabinendaches 18 verliersicher und lösbar angeordnet. Der Wechseleinsatz 28 ist dabei so ausgebildet, dass er, insbesondere in einer geschlossenen Position, die Dachöffnung 20 des Kabinendaches 18 vollständig abdeckt, wodurch beispielsweise ein Eindringen von Regen in die Fahrerkabine 12 vermieden werden kann. Der Wechseleinsatz 28 kann in unterschiedlichen Formen ausgebildet sein. So ist der in Figur 3 dargestellte Wechseleinsatz 28 in Form eines im Wesentlichen transparenten Abdeckmoduls 30 ausgebildet. Das dargestellte transparente Abdeckelement 30 ist dabei vollflächig transparent, also lichtdurchlässig und/oder durchsichtig, ausgebildet. Es ist ebenfalls denkbar, dass das transparente Abdeckelement 30 nur in einem Teilbereich transparent ist. In einer weiteren Ausgestaltung ist der Wechseleinsatz in Form eines intransparenten Abdeckmoduls 32 ausgebildet, welches in Figur 4 dargestellt ist und auf das später näher eingegangen werden wird.

Das transparente Abdeckmodul 30 ist aus einem transparenten Material, beispielsweise Glas oder Kunststoff, hergestellt, welches auch getönt sein kann. Dadurch kann neben einem zusätzlichen Lichteinfall in die Fahrerkabine 12 die Sicht des Bedieners beispielsweise auf einen angebauten Frontlader (nicht dargestellt) verbessert werden. Das transparente Abdeckelement 30 ist innerhalb der Dachöffnung 20 angeordnet und in einem geschlossenen Zustand dargestellt. Das transparente Abdeckelement 30 ist dabei so ausgebildet, dass es oberflächenbündig dem Formverlauf der Außenseite 22 des Kabinendaches 18 folgt. Frontseitig an dem Kabinendach 18 sind außenseitig zwei Befestigungsmittel 34 angeordnet, die jeweils mit dem Kabinendach 18 und dem transparenten Abdeckelement 30 verbunden sind. Die Befestigungsmittel 34 können sowohl mit dem Kabinendach als auch mit dem Wechseleinsatz 28 lösbar verbunden sein. Die in Figur 3 dargestellten Befestigungsmittel 34 sind als Kippscharniere ausgebildet, die ein Verschwenken des Wechseleinsatzes 28, und insbesondere des transparenten Abdeckelementes 30, von der dargestellten geschlossenen Position in eine geöffnete Position ermöglichen. In der geöffneten Position des Wechseleinsatzes 28, insbesondere in Form des transparenten Abdeckelementes 30, wird die den Befestigungsmitteln 34 gegenüberliegende Seite des Wechseleinsatzes 28 angehoben. Das dargestellte transparente Abdeckelement 30 ist frontseitig durch die Befestigungsmittel 34 gehalten, wobei in der geschlossen Position eine zusätzlich Verriegelung (nicht dargestellt), insbesondere an einer den Befestigungsmitteln 34 gegenüberliegenden Seite, den Wechseleinsatz 28 gegen ein unbeabsichtigtes Verbringen in die geöffnete Position sichern kann. Zum Halten des Wechseleinsatzes 28 in der geöffneten Position kann eine zwischen dem Kabinendach 18 und dem Wechseleinsatz 28 wirkende Stützeinrichtung (nicht dargestellt) vorgesehen sein, die als Kraftunterstützung beim Heben und Halten des Abdeckelements in der geöffneten Position wirkt.

Ein Wechseleinsatz 28 in Form eines intransparenten Abdeckmoduls 32 ist in Fig. 4 dargestellt. Das intransparente Abdeckmodul 32 ist dabei in der geschlossenen Position dargestellt, wobei das intransparente Abdeckmodul 32 außenseitig dem Formverlauf des Kabinendaches 18 folgend ausgebildet ist. Die äußeren Abmessungen sowie die mit dem Kabinendach 18 zusammenwirkenden Bereiche des intransparenten Abdeckmoduls 32 können dabei im Wesentlichen die gleichen Abmessungen wie die entsprechenden Bereiche des transparenten Abdeckmoduls 30 aufweisen, um eine Austauschbarkeit der Wechseleinsätze28 zu gewährleisten. An dem intransparente Abdeckmodul 32 in Fig. 4 ist frontseitig eine ebenfalls intransparente Verlängerung vorgesehen, welche das Kabinendach 18 außenseitig zumindest teilweise abdecken kann. Durch die frontseitige Verlängerung des intransparenten Abdeckmoduls 32 können bei einem Austausch der Wechseleinsätze 28 nach einem Entfernen des transparenten Abdeckmoduls 34 an dem Kabinendach 18 verbleibende Befestigungsmittel 34 abgedeckt werden. Das intransparente Abdeckmodul 32 kann beispielsweise vollständig innenseitig gegen ein Verschwenken oder lösen in der geschlossenen Position verriegelt werden.

In Fig. 5 ist eine entlang der Linie A-A geschnittene Ansicht des intransparenten Abdeckmoduls 32 aus Fig. 4 in einer geschlossenen Position dargestellt. Das intransparente Abdeckmodul 32 ist in der Dachöffnung 20 in dem Kabinendach 18 angeordnet, und ist dabei innenseitig und außenseitig dem Formverlauf des Kabinendaches 18 folgend ausgebildet. Das intransparente Abdeckmodul 32 weist frontseitig eine ebenfalls intransparente Verlängerung auf, welche das Kabinendach 18 zumindest teilweise außenseitig abdeckt. Zwischen dem Wechseleinsatz 28 und dem Kabinendach 18 ist umlaufend um die Dachöffnung 20 eine Dichtung 36 angeordnet, welche in einer geschlossenen Position des Wechseleinsatzes 28 ein Abdichten der Fahrerkabine 12 gegen Umwelteinflüsse, beispielsweise Regen, ermöglicht. Die Dichtung 36 kann dabei an einem in dem Kabinendach 18 und/oder der Dachöffnung 20 ausgebildeten Absatz 38 angeordnet sein, welcher die Dachöffnung 20 umlaufend ausgebildet sein kann. Das intransparente Abdeckmodul 32 weist innenseitig einen Bauraum 40 auf, welcher beispielsweise zur Aufnahme von Geräten und/oder Schalldämmung genutzt werden kann. Der Bauraum 40 ist im Wesentlichen innerhalb der Dachöffnung 20 des Kabinendaches 18 angeordnet und ausgebildet.

### Bezugszeichenliste

- 10: landwirtschaftliches Fahrzeug
- 12: Fahrerkabine
- 14: Kabinenscheibe
- 16: Kabinentür
- 18: Kabinendach
- 20: Dachöffnung
- 22: Außenseite
- 24: Innenseite
- 26: Wandung
- 28: Wechseleinsatz
- 30: transparentes Abdeckmodul
- 32: intransparentes Abdeckmodul
- 34: Befestigungsmittel
- 36: Dichtung
- 38: Absatz
- 40: Bauraum

## Patentansprüche

1. Landwirtschaftliches Fahrzeug mit einer Fahrerkabine (12) , welche ein Kabinendach (18) aufweist, wobei das Kabinendach (18) mindestens eine durchgängige Dachöffnung (20) aufweist, wobei das Kabinendach (18) derart ausgebildet und ausgestaltet ist, dass in der Dachöffnung (20) ein mit dem Kabinendach (18) zusammenwirkender Wechseleinsatz (28) lösbar angeordnet ist, wobei der Wechseleinsatz (28) in Form eines intransparenten Abdeckmoduls (32) oder eines im Wesentlichen transparenten Abdeckmoduls (30) ausgebildet ist, wobei der als transparentes Abdeckmodul (30) ausgeführte Wechseleinsatz (28) und der als intransparentes Abdeckmodul (32) ausgeführte Wechseleinsatz austauschbar am Kabinendach (18) angeordnet sind und mindestens ein innenseitig und/oder außenseitig an dem Kabinendach (18) angeordnetes Befestigungsmittel (34) zum lösbaren Befestigen des Wechseleinsatzes (28) vorgesehen ist, wobei das intransparente Abdeckmodul (32) derart ausgebildet ist, dass in der geschlossenen Position die Befestigungsmittel (34) und/oder Aufnahmen der Befestigungsmittel (34) durch das intransparente Abdeckmodul (32) abgedeckt werden, **dadurch gekennzeichnet, dass** der Wechseleinsatz (28) in einer geschlossenen Position innenseitig und außenseitig oberflächenbündig dem Formverlauf des Kabinendaches (18) folgend ausgebildet ist.

2. Landwirtschaftliches Fahrzeug nach Anspruch 1, **dadurch gekennzeichnet, dass** das Befestigungsmittel (34) derart ausgebildet und angeordnet ist, dass der Wechseleinsatz (28) von einer geschlossenen Position in eine geöffnete Position verbringbar ist.

3. Landwirtschaftliches Fahrzeug nach einem der vorherigen Ansprüche, **dadurch gekennzeichnet, dass** das Befestigungsmittel (34) ein, insbesondere frontseitig, an dem Kabinendach (18) angeordnetes Kippscharnier ist.

4. Landwirtschaftliches Fahrzeug nach einem der vorherigen Ansprüche, **dadurch gekennzeichnet, dass** eine Dachöffnung (20) frontseitig und/oder heckseitig an dem Kabinendach (18) angeordnet ist.

5. Landwirtschaftliches Fahrzeug nach einem der vorherigen Ansprüche, **dadurch gekennzeichnet, dass** das intransparente Abdeckmodul (32) innenseitig einen, insbesondere innerhalb der Dachöffnung (20) angeordneten, Bauraum (40) aufweist.

6. Montageverfahren für ein Kabinendach (18) einer Fahrerkabine (12) eines landwirtschaftlichen Fahrzeuges (10) nach einem oder mehreren der vorhergehenden Ansprüche wobei ein Kabinendach (18) mit einer durchgängigen Dachöffnung (20) sowie mindestens ein Wechseleinsatz (28) zum Zusammenwirken mit dem Kabinendach (18) bereitgestellt wird,
wobei der Wechseleinsatz (28) in Form eines intransparenten Abdeckmoduls (32) oder eines im Wesentlichen transparenten Abdeckmoduls (30) ausgebildet ist, und dass der Wechseleinsatz (28) zur Herstellung eines intransparenten oder zumindest teilweise transparenten Zustandes des Kabinendaches (18) in der Dachöffnung (20) angeordnet und lösbar befestigt wird, wobei das intransparente Abdeckmodul (32) derart ausgebildet ist, dass in der geschlossenen Position die Befestigungsmittel (34) und/oder Aufnahmen der Befestigungsmittel (34) durch das intransparente Abdeckmodul (32) abgedeckt werden und der Wechseleinsatz (28) in einer geschlossenen Position innenseitig und außenseitig oberflächenbündig dem Formverlauf des Kabinendaches (18) folgend ausgebildet ist.

## Claims

1. An agricultural vehicle with a driver's cabin (12), which has a cabin roof (18), wherein the cabin roof (18) has at least one through roof opening (20), wherein the cabin roof (18) is constructed and configured in a manner such that an interchangeable insert (28) which cooperates with the cabin roof (18) is releasably disposed in the roof opening (20), wherein the interchangeable insert (28) is configured in the form of an opaque cover module (32) or a substantially transparent cover module (30), wherein the interchangeable insert (28) configured as a transparent cover module (30) and the interchangeable insert configured as an opaque cover module (32) are interchangeably disposed on the cabin roof (18) and at least one fastening means (34) is provided on the inside and/or outside of the cabin roof (18) for releasably fastening the interchangeable insert (28), wherein the opaque cover module (32) is configured in a manner such that in the closed position, the fastening means (34) and/or retainers of the fastening means (34) are covered by the opaque cover module (32), **characterized in that** in a closed position, the interchangeable insert (28) is configured such that the inside and the outside thereof is flush with and follows the contours of the cabin roof (18).

2. The agricultural vehicle according to claim 1, **characterized in that** the fastening means (34) is constructed and disposed in a manner such that the interchangeable insert (28) can be brought from a closed position into an open position.

3. The agricultural vehicle according to one of the preceding claims, **characterized in that** the fastening means (34) is a tilting hinge which is disposed on the cabin roof (18), in particular at the front.

4. The agricultural vehicle according to one of the preceding claims, **characterized in that** a roof opening (20) is disposed at the front and/or rear of the cabin roof (18).

5. The agricultural vehicle according to one of the preceding claims, **characterized in that** the inside of the opaque cover module (32) has a constructed space (40), in particular disposed within the roof opening (20).

6. A method for assembling a cabin roof (18) of a driver's cabin (12) of an agricultural vehicle (10) according to one or more of the preceding claims, wherein a cabin roof (18) is provided, having a through roof opening (20) as well as at least one interchangeable insert (28) for cooperation with the cabin roof (18), wherein the interchangeable insert (28) is configured in the form of an opaque cover module (32) or a substantially transparent cover module (30), and in that, in order to make the cabin roof (18) opaque or at least partially transparent, the interchangeable insert (28) is disposed in the roof opening (20) and releasably fastened, wherein the opaque cover module (32) is configured in a manner such that in the closed position, the fastening means (34) and/or retainer for the fastening means (34) are covered by the opaque cover module (32) and in a closed position, the interchangeable insert (28) is configured such that the inside and the outside thereof is flush with and follows the contours of the cabin roof (18).

## Revendications

1. Véhicule agricole comprenant une cabine de conduite (12) qui comporte un toit de cabine (18), le toit de cabine (18) comportant au moins une ouverture de toit traversante (20), le toit de cabine (18) étant conçu et agencé de façon que dans l'ouverture de toit (20) soit disposé de façon amovible un insert remplaçable (28) coopérant avec le toit de cabine (18), l'insert remplaçable (28) étant conçu sous la forme d'un module de recouvrement non transparent (32) ou d'un module de recouvrement sensiblement transparent (30), l'insert remplaçable (28) conformé en module de recouvrement transparent (30) et l'insert remplaçable conformé en module de recouvrement non transparent (32) étant disposés de façon échangeable sur le toit de cabine (18), et au moins un moyen de fixation (34) disposé côté intérieur et/ou côté extérieur sur le toit de cabine (18) étant prévu pour la fixation amovible de l'insert remplaçable (28), le module de recouvrement non transparent (32) étant conçu de façon que, dans la position fermée, les moyens de fixation (34) et/ou des logements des moyens de fixation (34) soient recouverts par le module de recouvrement non transparent (32), **caractérisé en ce que**, dans cette position fermée, l'insert remplaçable (28) est conçu pour épouser le tracé du toit de cabine (18) en affleurant la surface côté intérieur et côté extérieur.

2. Véhicule agricole selon la revendication 1, **caractérisé en ce que** le moyen de fixation (34) est conçu et agencé de façon que l'insert remplaçable (28) puisse être amené d'une position fermée à une position ouverte.

3. Véhicule agricole selon une des revendications précédentes, **caractérisé en ce que** le moyen de fixation (34) est une charnière basculante disposée, en particulier côté avant, sur le toit de cabine (18).

4. Véhicule agricole selon une des revendications précédentes, **caractérisé en ce qu'**une ouverture de toit (20) est disposée côté avant et/ou côté arrière sur le toit de cabine (18).

5. Véhicule agricole selon une des revendications précédentes, **caractérisé en ce que** le module de recouvrement non transparent (32) comporte, côté intérieur, un espace de montage (40) disposé en particulier à l'intérieur de l'ouverture de toit (20) .

6. Procédé de montage d'un toit de cabine (18) d'une cabine de conduite (12) d'un véhicule agricole (10) selon une ou plusieurs des revendications précédentes, un toit de cabine (18) avec une ouverture de toit traversante (20) ainsi qu'au moins un insert remplaçable (28) pour coopérer avec le toit de cabine (18) étant prévus, l'insert remplaçable (28) étant conçu sous la forme d'un module de recouvrement non transparent (32) ou d'un module de recouvrement sensiblement transparent (30), et l'insert remplaçable (28) étant disposé et fixé de façon amovible dans l'ouverture de toit (20) pour créer un état du toit de cabine (18) non transparent ou au moins en partie transparent, le module de recouvrement non transparent (32) étant conçu de façon que, dans la position fermée, les moyens de fixation (34) et/ou logements des moyens de fixation (34) soient recouverts par le module de recouvrement non transparent (32), et l'insert remplaçable (28) étant conçu pour épouser le tracé du toit de cabine (18) en affleurant la surface côté intérieur et côté extérieur.
